# EUROPÄISCHE PATENTANMELDUNG

(11) **EP 4 681 584 A2**
(43) Veröffentlichungstag der Anmeldung: **21.01.2026**
(21) Anmeldenummer: 25213668.4
(22) Anmeldetag: 07.03.2022
(51) Int. Cl.: A47J 43/06

(54) **KÜCHENMASCHINESYSTEM UND VERFAHREN ZUM BETREIBEN EINES KÜCHENMASCHINESYSTEMS**

(62) Teilanmeldung aus: 22160526.4
(71) Anmelder: Vorwerk & Co. Interholding GmbH, 42275 Wuppertal (DE)
(72) Erfinder: Beckmann, Nils, 42857 Remscheid (DE); Schmitz, Kevin, 42781 Haan-Gruiten (DE); Lang, Torsten, 42657 Solingen (DE); Sernecki, Miron, 58097 Hagen (DE); Haunschild, Felix, 45239 Essen (DE)
(74) Vertreter: Cohausz & Florack

(57) **Zusammenfassung**

Die Erfindung betrifft ein Küchenmaschinesystem (102, 202, 402) mit einem ein Gehäuse (114, 214, 412), eine Steuereinrichtung (124, 222, 418) und eine Kommunikationsschnittstelle (126, 224, 422) aufweisenden Grundgerät (104, 204, 404) und mit mindestens einem ein Identifikationsmerkmal aufweisenden Zubehörteil (106, 108, 206, 406). Zur Verbesserung der Nutzerfreundlichkeit ist vorgesehen, dass eine zum Erfassen eines Identifikationsmerkmals mindestens eines Zubehörteils (106, 108, 206, 406) eingerichtete Erfassungseinrichtung (120, 218, 416) vorgesehen ist, und dass die Steuereinrichtung (124, 222, 418) dazu eingerichtet ist, ein durch die Erfassungseinrichtung (120, 218, 416) erfasstes Identifikationsmerkmal mit mindestens einem Identifikationsmerkmal aus einer Datenbank (122, 220, 420) zu vergleichen, mindestens einen Arbeitsmodus, der mit einem mit dem erfassten Identifikationsmerkmal übereinstimmenden Identifikationsmerkmal aus der Datenbank (122, 220, 420) verknüpft ist, über die Kommunikationsschnittstelle (126, 224, 422) als Schnellstartmodus zur Verfügung zu stellen. Weiter betrifft die Erfindung ein Verfahren zum Betreiben eines Küchenmaschinesystems (102, 202, 402) und ein entsprechendes Computerporgramm.

## Beschreibung

Die Erfindung betrifft ein Küchenmaschinesystem mit einem ein Gehäuse, eine Steuereinrichtung und eine Kommunikationsschnittstelle aufweisenden Grundgerät und mit mindestens einem ein Identifikationsmerkmal aufweisenden Zubehörteil. Außerdem betrifft die Erfindung ein Verfahren zum Betreiben eines Küchenmaschinesystems.

Küchenmaschinen der eingangs genannten Art sind bereits bekannt, insbesondere zum Verarbeiten von rohen oder halbfertigen Lebensmittelprodukten. Diese Küchenmaschinen weisen ein Grundgerät auf, mit dem separate Bauteile zusammenwirken, um je nach erzieltem Gericht, Getränk oder Ähnliches ein Lebensmittel zu verarbeiten. Derartige Bauteile werden in der Regel durch Küchenmaschinenanbieter als Zubehörteile verkauft, zum Beispiel als Kochgefäß, Gargefäß, Deckel, Schneide- oder Rühreinheit oder Ähnliches. Im Allgemeinen weisen jeweils das Zubehörteil und das Grundgerät jeweils miteinander kompatible Schnittstellen auf, die ein Zusammenwirken beider Bauteile ermöglichen. Insbesondere kann durch miteinander in Zusammenwirkung gebrachten Schnittstellen ein Antrieb eines beweglichen Elements des Zubehörteils durch einen in dem Grundgerät angeordneten Elektromotor erfolgen.

Oft werden Küchenmaschinesysteme mit einer Auswahl an Zubereitungsanleitungen wie Kochrezepte vertrieben, für deren Durchführung die mitverkauften Zubehörteile eingesetzt werden. Diese Zubereitungsanleitungen können dem Nutzer in Papierform als Buch oder auch in digitaler Form zur Verfügung gestellt werden, zum Beispiel auf einem Datenträger wie zum Beispiel einem USB-Stick oder in einer Datenbank gespeichert, die auf einem Speichermedium der Steuereinrichtung des Küchenmaschinesystems hinterlegt ist. Im Laufe der Zeit und mit Zukauf weiterer Zubehörteile erweitert sich die Anzahl an Zubereitungsanleitungen und es wird für den Nutzer zunehmend schwierig, den Überblick zu behalten bzw. eine bestimmte Zubereitungsanleitung zu finden.

Der vorliegenden Erfindung liegt vor diesem Hintergrund die Aufgabe zu Grunde, bekannte Küchenmaschinesysteme zu verbessern und insbesondere die Erfolgsaussichten sowie die Nutzerfreundlichkeit bei der Nutzung eines Küchenmaschinesystems zu erhöhen.

Diese Aufgabe wird mit einem Küchenmaschinesystem der eingangs genannten Art dadurch gelöst, dass eine zum Erfassen eines Identifikationsmerkmals mindestens eines Zubehörteils eingerichtete Erfassungseinrichtung vorgesehen ist, und dass die Steuereinrichtung dazu eingerichtet ist, ein durch die Erfassungseinrichtung erfasstes Identifikationsmerkmal mit mindestens einem Identifikationsmerkmal aus einer Datenbank zu vergleichen, und mindestens einen Arbeitsmodus, der mit einem mit dem erfassten Identifikationsmerkmal übereinstimmenden Identifikationsmerkmal aus der Datenbank verknüpft ist, über die Kommunikationsschnittstelle als Schnellstartmodus zur Verfügung zu stellen.

So bietet das Küchenmaschinesystem ein intelligentes Vorsortieren der relevanten Zubereitungsanleitungen und verringert die Anzahl an Nutzereingaben, bis eine für das Zubehörteil zutreffende Zubereitungsanleitung angezeigt wird. Außerdem ermöglicht das Format "Schnellstartmodus" ein weiteres Minimieren der Nutzereingaben, bis mit der tatsächlichen Durchführung des dem Schnellstartmodus entsprechenden Zubereitungsvorgangs gestartet wird.

Ein Grundgerät im Sinne der vorliegenden Erfindung ist vorzugsweise als Basis für den Einsatz von Zubehörteilen ausgebildet, indem es eine Schnittstelle für ein Zusammenwirken mit mindestens einem Zubehörteil aufweist. Das Grundgerät weist ein Gehäuse auf, in dem ein Elektromotor zum Antrieb von Zubehörteilen angeordnet ist. Der Elektromotor wirkt dann mit einem am Grundgerät eingesetzten Zubehörteil über die Schnittstelle des Grundgeräts zusammen.

Als Zubehörteil wird jedes für ein Zusammenwirken mit dem Grundgerät ausgebildetes Teil verstanden. Das Zubehörteil kann mittelbar oder unmittelbar am Grundgerät einsetzbar sein, wobei für ein unmittelbares Einsetzen das Zubehörteil eine mit der Schnittstelle des Grundgeräts kompatible Schnittstelle aufweist, und wobei für ein unmittelbares Einsetzen das Zubehörteil an einem weiteren Zubehörteil angesetzt ist, das wiederum unmittelbar am Grundgerät eingesetzt ist. Der Begriff "Einsetzen" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Schneide-, Rühr-, Koch-, Wiege-, Gar-, Dampf- oder Abdeckungseinheit. Die Funktion, für die das Zubehörteil vorgesehen ist, bezeichnet vorzugsweise den Zubehörteiltyp.

Der Begriff Identifikationsmerkmal umfasst jede Information über mindestens eine Eigenschaft des Zubehörteils. Vorzugsweise reicht das Identifikationsmerkmal aus, um ein Zubehörteil zu identifizieren bzw. im Kontext einer Datenbank zuordnen zu können. Ein Identifikationsmerkmal im Sinne der Erfindung kann aus der nicht abschließenden Liste ausgewählt sein: Zubehörteiltyp, wie zum Beispiel Schneide-, Rühr-, Koch-, Wiege-, Gar-, Dampf- oder Abdeckungseinheit; Herkunftsinformation, wie Herstelleridentität, Herstellungszeitpunkt, Herstellungsort; Authentifizierungsinformation; Identifikationsnummer, wie zum Beispiel eine Seriennummer oder einen Universally Unique Identifier (UUID). Vorzugsweise ist das Identifikationsmerkmal durch den Zubehörteilhersteller vor Vertrieb vergeben worden.

Das Informationsmerkmal ist vorzugsweise auf einem Datenträger gespeichert, der in dem Grundkörper des Zubehörteils integriert oder am Grundkörper des Zubehörteils dauerhaft angebracht ist. Es können mehrere Datenträger vorgesehen sein, die jeweils ein Identifikationsmerkmal tragen, und die an unterschiedlichen Positionen am Zubehörteil angeordnet sind. So kann je nach Einsatzposition bzw. Richtung, in der das Zubehörteil am Grundgerät eingesetzt ist, ein der Einsatzposition entsprechendes Identifikationsmerkmal erfasst werden. Alternativ oder zusätzlich kann ein Datenträger mehrere Identifikationsmerkmale aufweisen, die jeweils in Abhängigkeit von der Einsatzposition des Zubehörteils am Grundkörper erfasst werden. Insbesondere kann ein Datenträger umschaltbar, zum Beispiel mithilfe eines Magnets, sein und in Abhängigkeit von der Schaltposition bzw. von dem Schaltzustand ein entsprechendes Identifikationsmerkmal zur Erfassung bereitstellen. Somit kann für ein Zubehörteil, das mehrere Einsatzpositionen am Grundgerät annehmen kann, ein passender Schnellstartmodus in Abhängigkeit von seiner aktuellen Einsatzposition automatisch aufgerufen werden.

Die Erfassungseinrichtung ist dazu eingerichtet, das Identifikationsmerkmal des Zubehörteils zu erfassen. Ist zum Beispiel das Identifikationsmerkmal in Form eines QR-Codes am Zubehörteil angebracht, so ist die Erfassungseinrichtung vorzugsweise als optischer Leser ausgebildet. Die Erfassungseinrichtung kann auch ein Leser für einen an eine RFID-Antenne verbundenen Datenspeicher, ein Teil eines Nahfunk-Systems (z.B. Bluetooth, Ultra-Wide-Band (UWB) oder WLAN) oder ein Teil eines Bussystems sein. Die Erfassungseinrichtung kann am Grundkörper angeordnet sein oder als vom Grundkörper und vom Zubehörteil separates Gerät ausgebildet sein, zum Beispiel als Smartphone mit einem Erfassungselement wie eine integrierte Kamera, das über die Kommunikationsschnittstelle mit der Steuereinrichtung des Grundgeräts für einen Datenaustausch direkt oder indirekt verbunden ist.

Außerdem kann die Erfassungseinrichtung über eine Kommunikationsverbindung mit einem Erfassungselement verbindbar sein, das an einem ersten Zubehörteil angeordnet ist. Das Erfassungselement ist vorzugsweise dazu eingerichtet, ein Identifikationsmerkmal eines weiteren Zubehörteils zu erfassen. Auf diese Art kann das weitere Zubehörteil erst erkannt und dann für eine bestimmungsgemäße Benutzung am Grundgerät oder am ersten Zubehörteil eingesetzt werden. Dies ist für Zubehörteile, deren Identifikationsmerkmal sich in der bestimmungsgemäßen Einsatzposition nur schwierig erfassen lässt, insbesondere aufgrund einer zu niedrigen Signalübermittlung durch den Boden eines als Kocheinheit ausgebildeten ersten Zubehörteils, besonders vorteilhaft.

Weiterhin ist eine Steuereinrichtung in dem Gehäuse oder am Gehäuse des Grundgeräts angeordnet. Die Steuereinrichtung weist vorzugsweise einen Prozessor mit einem Speichermedium auf. Insbesondere kann ein Computerprogramm mit Befehlen auf dem Speichermedium gespeichert sein, deren Ausführung durch den Prozessor die Durchführung eines Betriebsverfahrens durch die Küchenmaschine bewirkt.

Auf dem Speichermedium kann eine Datenbank mit Identifikationsmerkmalen und Kochinformationen bzw. voreingestellten Arbeitsmodi gespeichert sein. Vorzugsweise ist auf dem Speichermedium der Steuereinrichtung eine derartige Datenbank hinterlegt, dass im Betrieb auf einen Zugriff auf eine externe Informationsquelle bzw. auf eine externe Datenbank verzichtet werden kann. Das Küchenmaschinesystem, insbesondere die Steuereinrichtung, kann derart eingerichtet sein, dass die Steuereinrichtung auf eine externe Datenbank zugreift, wenn die in der Datenbank auf dem Speichermedium der Datenbank hinterlegten Informationen nicht ausreichend sind. So kann zum Beispiel beim ersten Einsatz eines Zubehörteils die Steuereinrichtung auf eine externe Datenbank zugreifen, um Kochinformationen für dieses Zubehörteil auf ihr Speichermedium herunterzuladen. Außerdem ist die Steuereinrichtung vorzugsweise für einen Zugriff über Internet mit einem externen Server, zum Beispiel einem Server des Herstellers des Küchenmaschinesystems, verbindbar.

In der Datenbank sind Identifikationsmerkmale hinterlegt, mit denen jeweils mindestens ein Arbeitsmodus verknüpft ist. Als Arbeitsmodus wird vorliegend eine Einheit aus Betriebsparametern und Zubereitungsanweisungen zur Durchführung eines Zubereitungsvorgangs am Küchenmaschinesystem verstanden. Dabei kann ein Arbeitsmodus eine Auswahl an vorbestimmten Sollwerten für Betriebsparameter und / oder Zubereitungsanweisungen umfassen, die dann dem Nutzer zur Auswahl gestellt werden, wenn der Arbeitsmodus in einer Liste von Arbeitsmodi ausgewählt worden ist.

So kann zum Beispiel ein Arbeitsmodus mindestens einen Sollwert für einen Betriebsparameter für ein Bauteil des Küchenmaschinesystems und / oder mindestens eine Zubereitungsanweisung für einen durch den Nutzer durchzuführenden Schritt umfassen. Hierzu zählen beispielsweise eine Zutatenart, ein Sollwert für eine Zutatenmenge, ein Sollwert für ein Zutatengewicht, ein Sollwert für ein Zutatenvolumen, ein Sollwert für eine Drehzahl für den Elektromotor, ein Sollwert für eine Drehrichtung für den Elektromotor, ein Sollwert für ein Drehmoment des Elektromotors, ein Sollwert für eine Temperatur, ein Sollwert für einen Feuchtigkeitsgrad, ein Sollwert für eine Dauer, Angaben aus einem Kochrezept, eine Einleitung zur Erstbenutzung eines Zubehörteils am Grundgerät. Insbesondere ist ein Arbeitsmodus an die Eigenschaften der Küchenmaschine und deren Bestandteile angepasst, so dass die Anwendung der Kochinformation möglichst auf den Einsatz der Küchenmaschine und deren originalen Zubehörteile begrenzt ist.

Vorzugsweise ist die Steuereinrichtung dazu eingerichtet, einen Arbeitsmodus entsprechend einer durch die Kommunikationsschnittstelle erfassten Nutzereingabe mit einem Identifikationsmerkmal zu verknüpfen und diese Verknüpfung in der Datenbank zu speichern. Die Verknüpfung kann durch den Nutzer, also nach Vertrieb des Küchenmaschinesystems, und / oder durch den Küchenmaschinesystemhersteller vor Vertrieb erfolgen. Weiterhin kann eine bestimmte Identifikationsnummer, wie zum Beispiel eine Seriennummer oder einen Universally Unique Identifier (UUID), eines bestimmten Zubehörteils mit einem Schnellstartmodus verknüpft werden, so dass nicht alle Zubehörteile eines Typs mit diesem Schnellstartmodus verknüpft sind, sondern nur das eine Zubehörteil. Dies erlaubt eine Individualisierung der Zubehörteile und der Menüführung bzw. der digitalen Begleitung beim Kochen mit dem Küchenmaschinesystem.

Die Steuereinrichtung ist dazu eingerichtet, einen Arbeitsmodus über die Kommunikationsschnittstelle als Schnellstartmodus zur Verfügung zu stellen. Unter dem Begriff "Schnellstartmodus" wird eine Abwandlung eines Arbeitsmodus verstanden, die einen vereinfachten und schnellen Start eines entsprechenden Zubereitungsvorgangs erlaubt. Vorzugsweise sind Sollwerte für Betriebsparameter bei einem Schnellstartmodus im Wesentlichen voreingestellt, so dass die Anzahl an Nutzeranfragen gegenüber einem Standard-Arbeitsmodus, bei dem Sollwerte erst eingegeben werden, verringert ist. Insbesondere kann bei einem Schnellstartmodus die Anzahl an einstellbaren Parametern geringer sein als bei dem Arbeitsmodus, von dem der Schnellstartmodus abgewandelt ist. So kann beispielsweise ein Arbeitsmodus "Wasserkochen" mehrere Sollwerte für eine Temperatur zur Auswahl anbieten, wie 70 °C, 80 °C, 90 °C und 100 °C, die sich zur Zubereitung von Wasser für Tee eignen, oder einfach um Wasser zum Kochen zu bringen. Ein entsprechender Schnellstart könnte dann einen einzigen Sollwert "70 °C" haben, so dass auf eine Nutzereingabe verzichtet und mit dem Zubereitungsvorgang automatisch gestartet werden kann.

Zusätzlich oder alternativ kann ein Schnellstartmodus ein Arbeitsmodus sein, der einen Formatierungsschritt zur Vereinfachung des Zugangs durchgegangen ist. So kann eine Priorisierung eines bestimmten Arbeitsmodus gegenüber weiteren Arbeitsmodi einer Umwandlung in einem Schnellstartmodus entsprechen.

Weiter bevorzugt entspricht ein Schnellstartmodus einer Parametervoreinstellung für einen Zubereitungsvorgang mithilfe mindestens eines bestimmten Zubehörteils. Ein Beispiel für einen derartigen Schnellstartmodus ist eine Voreinstellung bei einer Solltemperatur von 100 °C und einer Dauer von 2 Minuten für ein als Wasserkochergefäß ausgebildetes Zubehörteil. Ein weiteres Beispiel ist eine Voreinstellung für einen Zubereitungsvorgang in der Art einer "Sous-Vide" Zubereitung eines Stücks Fleisch, wenn das Zubehörteil eine Messerabdeckung ist. Außerdem kann ein Schnellstartmodus derart definiert sein, dass er aufgerufen bzw. zur Verfügung gestellt wird, wenn eine bestimmte Zubehörteilkombination erkannt wird. So können zum Beispiel mehrere Deckel mit einer Kocheinheit kombinierbar sein, wobei jeweils ein Schnellstartmodus in Abhängigkeit vom Erkennen eines bestimmten Deckels aufgerufen und zur Verfügung gestellt wird.

Eine Kommunikationsschnittstelle kann vorliegend eine Benutzerschnittelle in Form einer akustischen, haptischen oder optischen Anzeige, aber auch eine Schnittstelle zum Weiterleiten von Informationen an ein Nutzerendgerät wie zum Beispiel ein Smartphone oder ein digitales Hausverwaltungssystem sein. So stellt die Kommunikationsschnittstelle Informationen unmittelbar, das heißt zum Beispiel selbst als Display, oder mittelbar über eine zusätzliche Nutzerschnittstelle zur Verfügung.

Vorzugsweise stellt die Steuereinrichtung einen für das erfasste Identifikationsmerkmal zutreffenden Arbeitsmodus als Schnellstartmodus durch exklusives Anzeigen zur Verfügung. So kann zum Beispiel die Kommunikationsschnittstelle nur einen Schnellstartmodus anzeigen, insbesondere ohne dass weitere Arbeitsmodi angezeigt sind. Dadurch bietet das Küchenmaschinesystem dem Nutzer eine übersichtliche Anzeige.

Gemäß einer ersten Ausführungsform des Küchenmaschinesystems weist der Schnellstartmodus mindestens ein Element aus der Liste auf: eine an das Zubehörteil angepasste Voreinstellung, eine Zubereitungsanweisung entsprechend eines mit dem Zubehörteil durchführbaren Zubereitungsvorgangs, ein Sollwert für einen Zubereitungsparameter, eine Nutzeranfrage über eine Parametereinstellung, eine Nutzeranfrage über eine Bestätigung für den Start eines Zubereitungsvorgangs.

So können sämtliche Betriebsparameter für das Küchenmaschinesystem voreingestellt sein und auch vorbestimmte Sollwerte in Form von klaren Nutzerhinweisen ausgegeben werden, um den Nutzer bei der Durchführung eines dem Schnellstartmodus entsprechenden Zubereitungsvorgangs zu unterstützen. Darüber hinaus können durch Anzeigen von Nutzeranfragen aus dem Schnellstartmodus trotzdem Einstellungen vorgenommen werden oder zum Beispiel den Beginn eines Zubereitungsvorgang verzögern und / oder bestätigen.

Gemäß einer weiteren Ausführungsform des Küchenmaschinesystems ist die Steuereinrichtung dazu eingerichtet, zur Folge eines Erfassens eines Identifikationsmerkmals die Kommunikationsschnittstelle von einem Ruhemodus in einen Aktivmodus umzustellen und bei der Umstellung in den Aktivmodus einen dem erfassten Identifikationsmerkmal entsprechenden Schnellstartmodus über die Kommunikationsschnittstelle zur Verfügung zu stellen.

So kann unmittelbar nach dem Erfassen eines Zubehörteils bzw. beim Erkennen des Einsetzens eines Zubehörteils die Kommunikationsschnittstelle automatisch aktiviert und ein für das Zubehörteil passender Schnellstartmodus anzeigt werden. So kann insbesondere auf eine aufwändige Eingabe betreffend zum Bespiel den Typ des Zubehörteils und eine Auswahl eines Arbeitsmodus in einer Liste von Arbeitsmodi verzichtet werden.

Der Ruhemodus ist vorzugsweise ein Zustand, in dem die Aktivität der Kommunikationsschnittstelle heruntergefahren ist, um unter anderem Energie zu sparen. Der Ruhemodus kann ein Ruhezustand, wobei die Stromzufuhr der Kommunikationsschnittstelle unterbunden ist, oder ein Bereitschaftsmodus bzw. Stand-By-Modus sein, wobei die Stromzufuhr aufrechterhalten ist. So kann bei einer Gestaltung der Kommunikationsschnittstelle als Bildschirm im Ruhemodus ein dunkles Bild oder ein Bildschirmschoner angezeigt werden, oder die Pixel ausgeschaltet sein.

Vorzugsweise wird vorliegend zusammen mit dem Hochfahren der Kommunikationsschnittstelle in einen Aktivmodus als erstes der Schnellstartmodus zur Verfügung gestellt. Bei der Gestaltung der Kommunikationsschnittstelle als Bildschirm kann dann das erste angezeigte Bild mindestens eine Information aus dem Schnellstartmodus aufweisen. Ist die Kommunikationsschnittstelle zum Weiterleiten von Informationen an ein Nutzerendgerät wie zum Beispiel ein Smartphone ausgebildet, dann leitet die Kommunikationsschnittstelle beim Hochfahren vorzugsweise Datenpakete an das Smartphone weiter, die dem Inhalt des Schnellstartmodus entsprechen.

Alternativ oder zusätzlich kann ein Ruhemodus ein Zustand des Küchenmaschinesystems sein, bei dem die Steuereinrichtung ein Auswahlmenü über die Kommunikationsschnittstelle zur Verfügung stellt, und Funktionselemente wie zum Beispiel den Elektromotor allerdings inaktiv sind. So kann ein Wechseln vom Ruhemodus in einen Aktivmodus beim Auswählen eines Schnellstartmodus erfolgen.

Die Position eines Zubehörteils kann in Bezug auf das Grundgerät erfasst werden. Sind mindestens zwei Zubehörteile vorgesehen, dann kann die Position eines zweiten Zubehörteils, zum Bespiel einer Schneideeinheit, in Bezug auf die Position eines ersten Zubehörteils, zum Beispiel eines Rührtopfs, erfasst werden. Insgesamt kann die Positionserfassungseinrichtung dazu geeignet sein, die Position von einem oder von mehreren Zubehörteilen zu erfassen, und die Steuereinrichtung dazu eingerichtet sein, das Einsetzen oder Entfernen von einem oder von mehreren Zubehörteilen zusammen automatisch zu erkennen. Beispielsweise kann automatisch erkannt werden, ob ein Zubehörteil richtig in bzw. auf einem Kochgefäß eingesetzt ist, und auch ob das Kochgefäß wiederum richtig auf dem Grundgerät eingesetzt ist.

Gemäß einer weiteren Ausführungsform des Küchenmaschinesystems ist eine Positionserfassungseinrichtung vorgesehen und dazu eingerichtet, ein Einsetzen oder Entfernen mindestens eines Zubehörteils in Bezug auf das Grundgerät und / oder in Bezug auf ein weiteres Zubehörteil zu erfassen und an die Steuereinrichtung weiterzuleiten, und die Steuereinrichtung ist dazu eingerichtet, in Abhängigkeit von einem erfassten Identifikationsmerkmal und von einem erkannten Einsetzen eines Zubehörteils einen Schnellstartmodus zur Verfügung zu stellen, und / oder in Abhängigkeit von einem erfassten Identifikationsmerkmal und von einem erkannten Entfernen eines Zubehörteils die Zur-Verfügung-Stellung eines Schnellstartmodus zu beenden.

So stellt das Küchenmaschinesystem einen passenden Schnellstartmodus automatisch zur Verfügung, wenn ein Zubehörteil am Grundgerät eingesetzt wird. Daneben ist das Küchenmaschinesystem in der Lage, eine Anzeige des Schnellstartmodus automatisch zu beenden, wenn das Zubehörteil vom Grundgerät getrennt wird. Hierbei kann zum Beispiel ein Hauptmenü angezeigt werden.

Die Steuereinrichtung stellt einen Schnellstartmodus in Abhängigkeit von einer erkannten Position eines Zubehörteils zur Verfügung. Somit kann zum Beispiel erst beim Erkennen eines Einsetzens eines Zubehörteils ein zutreffender Schnellstartmodus zur Verfügung gestellt werden. Dadurch wird vermieden, dass ein Schnellstartmodus, der für Zubehörteile zutreffend ist, die zwar in der Umgebung des Grundgeräts und deren Identifikationsmerkmal durchaus durch die Erfassungseinrichtung erfasst werden können, jedoch nicht am Grundgerät eingesetzt werden sollen, zur Verfügung gestellt wird. Außerdem kann eine Zur-Verfügung-Stellung des Schnellstartmodus beendet werden, wenn ein Entfernen eines Zubehörteils vom Grundgerät erkannt wird. Somit werden Kochinformationen nur für tatsächlich am Grundgerät eingesetzte Zubehörteile zur Verfügung gestellt.

Vorzugsweise erkennt die Steuereinrichtung automatisch, ob die Position eines Zubehörteils ein bestimmungemäßes Zusammenwirken mit dem Grundgerät erlaubt, bzw. ob dieses richtig am Grundgerät oder an einem anderen Zubehörteil eingesetzt ist. So kann eine Beschädigung des Zubehörteils und / oder des Grundgeräts vermieden werden.

Die Positionserfassungseinrichtung kann beispielsweise als dedizierte Einrichtung, die mit einem Element am Zubehörteil zusammenwirkt, und / oder als Wiegemodul ausgebildet sein. Alternativ oder zusätzlich kann die Erfassungseinrichtung zum Erfassen eines Identifikationsmerkmals als Positionserfassungseinrichtung fungieren, indem ein Einsetzen erkannt wird, wenn ein Identifikationsmerkmal in dem Erfassungsfeld der Erfassungseinrichtung eintritt, und ein Entfernen erkannt wird, wenn ein Identifikationsmerkmal in dem Erfassungsfeld der Erfassungseinrichtung austritt. Alternativ oder zusätzlich kann die Positionserfassungseinrichtung als vom Grundgerät und vom Zubehörteil separates Gerät ausgebildet sein und über die Kommunikationsschnittstelle mit der Steuereinrichtung verbindbar sein.

Die Positionserfassungseinrichtung kann im Zubehörteil und/oder im Gehäuse des Grundgeräts angeordnet sein. Vorzugsweise weist das Zubehörteil mindestens ein Element auf, das dazu eingerichtet ist, die Positionserfassungseinrichtung zu beeinflussen, und die Positionserfassungseinrichtung ist dazu eingerichtet, in Abhängigkeit von der Beeinflussung durch das Element ein Signal bzw. eine Information mit einer Positionsinformation auszugeben.

Insbesondere kann das Zusammenwirken des Elements des Zubehörteils mit der Positionserfassungseinrichtung wie folgt ausgestaltet sein:
- Öffnen oder Schließen eines elektrischen Kontakts zwischen dem Element am Zubehörteil und der Positionserfassungseinrichtung durch Positionsänderung des Zubehörteils relativ zum Grundgerät;
- Öffnen oder Schließen eines magnetischen Kontakts, zum Beispiel ein Reed-Kontakt, zwischen einem als Magnet ausgebildeten Element am Zubehörteil und der Positionserfassungseinrichtung durch Positionsänderung des Zubehörteils relativ zum Grundgerät;
- Erfassen einer durch Zusammenwirken eines Metallteils am Zubehörteil und eines aktiven Erfassungselements der Positionserfassungseinrichtung herbeigeführten Induktivitäts- oder Kapazitätsänderung; und / oder
- Erfassen der Intensität des Magnetfeldes eines am Zubehörteil angeordneten Magnets durch ein aktives Erfassungselement der Positionserfassungseinrichtung.

Gemäß einer weiteren Ausführungsform des Küchenmaschinesystems vergibt die Steuereinrichtung dem Schnellstartmodus für die Zur-Verfügung-Stellung einen hohen Prioritätsrang, vorzugsweise den höchsten Prioritätsrang, und die Steuereinrichtung stellt Informationen über die Kommunikationsschnittstelle nach einer priorisierten Anordnung, insbesondere in einer Reihenfolge nach absteigendem Prioritätsrang zur Verfügung.

So kann der Schnellstartmodus zum Beispiel als Erster in einer Liste von Arbeitsmodi angezeigt werden und somit auch der Zugang zum Schnellstartmodus für den Nutzer vereinfacht werden. Insbesondere kann einem Schnellstartmodus ein höherer Prioritätsrang für die Anzeige zugeordnet werden als für einen Arbeitsmodus, der nicht mit dem Identifikationsmerkmal des Zubehörteils verknüpft ist. Insgesamt bietet das Küchensystem eine intelligente Anzeige und eine erhöhte Nutzerfreundlichkeit.

Sollen mehrere Arbeitsmodi mit einem mit dem erfassten Identifikationsmerkmal übereinstimmenden Identifikationsmerkmal verknüpft sein, dann kann die Steuereinrichtung vorzugsweise Schnellstartmodi für diese Arbeitsmodi jeweils den gleichen Prioritätsrang oder aneinanderreihende Prioritätsränge vergeben. So können die jeweiligen Schnellstartmodi zusammen oder gruppiert angezeigt werden. Die Prioritätsränge können durch einen Benutzer auch angepasst und verändert werden, so dass es zu einer bevorzugten Reihenfolge kommt.

Gemäß einer weiteren Ausführungsform des Küchenmaschinesystems weist der Schnellstartmodus mindestens eine Nutzeranfrage auf und die Steuereinrichtung ist dazu eingerichtet, Funktionsteile des Küchenmaschinesystems gemäß Angaben aus dem Schnellstartmodus in Abhängigkeit von einer erfassten Nutzerantwort auf die Nutzeranfrage zu steuern.

Eine derartige Gestaltung ermöglicht zum Beispiel eine Bestätigungsabfrage, ob mit einem Zubereitungsvorgang gemäß dem Schnellstartmodus tatsächlich begonnen werden soll. Eine Bestätigungsabfrage kann zum Beispiel vorteilhaft sein, wenn für ein erfasstes Identifikationsmerkmal mehrere Schnellstartmodi in Frage kommen und der Nutzer so entscheiden kann, welcher durchgeführt werden soll.

Alternativ oder zusätzlich kann die Nutzeranfrage eine Abfrage über ein Betriebsparameter oder eine Zubereitungsanweisung sein. Dies kann vom Nutzer sein, wenn diese nicht vorhersehbar oder voreingestellt werden können. Vorzugsweise ist die Steuereinrichtung dazu eingerichtet, mindestens ein Betriebsparameter und / oder mindestens eine Zubereitungsanweisungen des Schnellstartmodus an eine Nutzerantwort anzupassen. So kann zum Beispiel ein Sollwert für eine Garzeit an eine Nutzerantwort betreffend eine Zutatenmenge oder eine Rührdauer an eine Nutzerantwort betreffend eine Rührgeschwindigkeit angepasst werden.

Gemäß einer weiteren Ausführungsform des Küchenmaschinesystems weist der Schnellstartmodus mindestens eine Angabe über einen Zubereitungsvorgang auf und die Steuereinrichtung ist dazu eingerichtet, gleichzeitig mit der Zur-Verfügung-Stellung des Schnellstartmodus mit der Durchführung des Zubereitungsvorgangs zu starten und Funktionsteile des Küchenmaschinesystems in Abhängigkeit von den Angaben zu steuern.

So kann beim Einsetzen eines Zubehörteil ein Zubereitungsvorgang direkt beginnen und auf Nutzereingaben verzichtet werden. Diese Ausführungsform ist besonders vorteilhaft, wenn für ein Zubehörteil eindeutig ist, welcher Arbeitsmodus bzw. Schnellstartmodus erwünscht ist. Wurde zum Beispiel für das Identifikationsmerkmal des eingesetzten Zubehörteils ein Schnellstartmodus als Favorit gespeichert worden ist, dann kann auf Nutzereingaben verzichtet werden und der entsprechende Zubereitungsvorgang ohne weitere Handlung seitens des Nutzers als das Einsetzen des Zubehörteils starten.

Als Funktionsteile können zum Beispiel der Elektromotor, ein Zubehörteil, eine Steuerung für ein Element eines Zubehörteils, wie zum Beispiel ein

Steuerungselement für ein Heizelement eines Zubehörteils, oder die Kommunikationsschnittstelle eingesetzt werden.

Gemäß einer weiteren Ausführungsform des Küchenmaschinesystems ist die Steuereinrichtung dazu eingerichtet, mehrere erfassten Identifikationsmerkmale mit Identifikationsmerkmalen aus einer Datenbank zu vergleichen, und als Schnellstartmodi Arbeitsmodi zur Verfügung zu stellen, die jeweils mit allen mit einem erfassten Identifikationsmerkmal übereinstimmenden Identifikationsmerkmalen aus der Datenbank verknüpft sind.

So kann ein Schnellstartmodus zur Verfügung gestellt werden, der für mehrere, zusammen oder nacheinander am Grundgerät eingesetzte Zubehörteile zutreffend ist. So kann durch Einsetzen aller für einen Zubereitungsvorgang erforderlichen Zubehörteile am Grundgerät automatisch die Auswahl an zutreffenden Schnellstartmodi eingeschränkt werden. Sollten mehrere Schnellstartmodi in Frage kommen, werden diese vorzugsweise zusammen oder zumindest als Gruppe zur Verfügung gestellt.

Gemäß einer weiteren Ausführungsform des Küchenmaschinesystems ist die Steuereinrichtung dazu eingerichtet, einen bereits in der Vergangenheit zur Verfügung gestellten Schnellstartmodus als Favorit zu speichern, und bei erneutem Erfassen desselben Identifikationsmerkmals den als Favorit gespeicherten Schnellstartmodus gesondert zur Verfügung zu stellen.

Dies erlaubt eine Anpassung der intelligenten Anzeige an Nutzervorlieben und erspart beim späteren Einsatz des Zubehörteils eine Nutzereingabe. Als gesonderte zu-Verfügung-Stellung kann beispielsweise eine besonders zugängliche Stellung auf einem Bildschirm, eine exklusive Anzeige, eine Angabe in einer Favoritenliste und / oder eine besonders betonte Betonung bei einer akustischen Wiedergabe vorgesehen sein.

Vorzugsweise wird ein als Favorit hinterlegte Schnellstartmodus mit einem höheren Prioritätsrang zur Verfügung gestellt als weitere, für das Identifikationsmerkmal ebenfalls zutreffend aber nicht als Favorit hinterlegte Schnellstartmodi. Der als Favorit gespeicherte Schnellstartmodus kann einzeln zur Verfügung gestellt werden.

Als Favorit werden vorzugsweise Schnellstartmodi entsprechend einer Nutzereingabe gespeichert. Alternativ oder zusätzlich werden Schnellstartmodi als Favorit gespeichert, die bereits mindestens einmal zur Verfügung gestellt worden sind und gegebenenfalls auch durchgeführt worden sind.

Die oben genannte Aufgabe wird auch durch ein Verfahren zum Betreiben eines Küchenmaschinesystems, insbesondere eines Küchenmaschinesystems nach einem der oben beschriebenen Ausführungsformen gelöst, bei dem mindestens ein Identifikationsmerkmal eines Zubehörteils erfasst wird, bei dem das mindestens eine erfasste Identifikationsmerkmal mit mindestens einem Identifikationsmerkmal aus einer Datenbank verglichen wird und bei dem mindestens ein mit einem mit dem erfassten Identifikationsmerkmal übereinstimmenden Identifikationsmerkmal verknüpfter Arbeitsmodus als Schnellstartmodus zur Verfügung gestellt wird.

Das Verfahren und dessen hier unten erläuterte Ausführungsbeispiele haben die gleichen Vorteile als die entsprechenden Ausführungsformen des Küchenmaschinesystems, wobei die Ausführungsformen des Küchenmaschinesystems und die Ausführungsbeispiele des Verfahrens untereinander und miteinander beliebig kombinierbar sind.

Gemäß einem ersten Ausführungsbeispiel des Verfahrens wird zur Folge eines Erfassens eines Identifikationsmerkmals eine Kommunikationsschnittstelle von einem Ruhemodus in einen Aktivmodus umgestellt und bei der Umstellung in den Aktivmodus wird ein dem erfassten Identifikationsmerkmal entsprechender Schnellstartmodus über die Kommunikationsschnittstelle zur Verfügung gestellt. Gemäß einem weiteren Ausführungsbeispiel des Verfahrens wird ein Einsetzen oder Entfernen mindestens eines Zubehörteils in Bezug auf das Grundgerät und / oder in Bezug auf ein weiteres Zubehörteil erfasst, ein Schnellstartmodus wird in Abhängigkeit von einem erfassten Identifikationsmerkmal und von einem erkannten Einsetzen eines Zubehörteils zur Verfügung gestellt und / oder die Zur-Verfügung-Stellung eines Schnellstartmodus wird in Abhängigkeit von einem erfassten Identifikationsmerkmal und von einem erkannten Entfernen eines Zubehörteils beendet.

Gemäß einem weiteren Ausführungsbeispiel des Verfahrens wird für die Zur-Verfügung-Stellung ein hoher Prioritätsrang, vorzugsweise der höchste Prioritätsrang dem Schnellstartmodus zugeordnet und Schnellstartmodi und / oder sonstige Arbeitsmodi werden in einer Reihenfolge nach absteigendem Prioritätsrang zur Verfügung gestellt.

Gemäß einem weiteren Ausführungsbeispiel des Verfahrens wird eine Nutzerantwort auf eine Nutzeranfrage aus einem Schnellstartmodus erfasst. In einer ersten Alternative werden Funktionsteile des Küchenmaschinesystems gemäß Angaben aus dem Schnellstartmodus in Abhängigkeit von der erfassten Nutzerantwort gesteuert. In einer weiteren Alternative wird gleichzeitig mit der Zur-Verfügung-Stellung des Schnellstartmodus mit der Durchführung eines Zubereitungsvorgangs entsprechend des Schnellstartmodus automatisch gestartet und Funktionsteile des Küchenmaschinesystems werden in Abhängigkeit von Angaben aus dem Schnellstartmodus gesteuert.

Gemäß einem weiteren Ausführungsbeispiel des Verfahrens wird der zur Verfügung gestellte Schnellstartmodus als Favorit gespeichert und der als Favorit gespeicherte Schnellstartmodus wird bei einem späteren, erneuten Erfassen desselben Identifikationsmerkmals gesondert zur Verfügung gestellt.

Ferner ist die oben genannte Aufgabe durch ein Computerprogramm aufweisend Befehle gelöst, deren Ausführung auf mindestens einem Prozessor einer Steuereinrichtung eines Küchenmaschinesystems nach einer der oben beschriebenen Ausführungsformen die Durchführung eines Verfahrens gemäß einem oben erläuterten Ausführungsbeispiel bewirkt.

Weitere Merkmale und Vorteile der vorliegenden Erfindung ergeben sich aus der nachfolgenden Beschreibung von Ausführungsbeispielen, wobei auf die beigefügte Zeichnung Bezug genommen wird.

In der Zeichnung zeigen
- Fig. 1: ein erstes Ausführungsbeispiel eines Küchenmaschinesystems,
- Fig. 2: ein weiteres Ausführungsbeispiel eines Küchenmaschinesystems,
- Fig. 3a und 3b: ein weiteres Ausführungsbeispiel eines Küchenmaschinesystems und
- Fig. 4: ein weiteres Ausführungsbeispiel eines Küchenmaschinesystems.

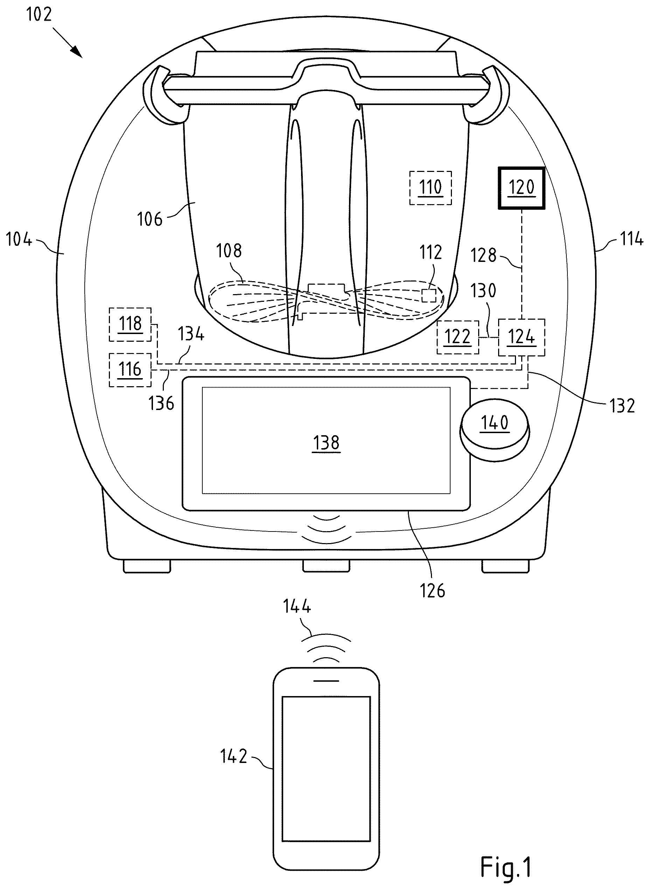

Fig. 1 zeigt ein erstes Ausführungsbeispiel eines Küchenmaschinesystems 102 mit einem Grundgerät 104, mit einem ersten, als Kochgefäß ausgebildeten Zubehörteil 106 und mit einem zweiten, als Messerabdeckung ausgebildeten Zubehörteil 108.

Die Zubehörteile 106, 108 weisen jeweils einen Datenträger 110, 112 in Form eines RFID-Etiketts auf, auf dem ein Identifikationsmerkmal als maschinenlesbare Information gespeichert ist. So sind auf dem Datenträger 110 des ersten Zubehörteils 106 eine erste Identifikationsnummer und auf dem Datenträger 112 des zweiten Zubehörteils 108 eine weitere Identifikationsnummer gespeichert. Bei dem dargestellten Zustand ist das zweite Zubehörteil 108 im ersten Zubehörteil 106 aufgenommen und das erste Zubehörteil 106 wiederum am Grundgerät 104 eingesetzt. So sind das erste Zubehörteil 106 unmittelbar und das zweite Zubehörteil 108 mittelbar, also über das erste Zubehörteil 106, am Grundgerät 104 eingesetzt.

Das Grundgerät 104 weist ein Gehäuse 114, einen Elektromotor 116, ein Steuerungselement 118 für ein Heizelement des ersten Zubehörteils 106, eine Erfassungseinrichtung 120, ein Speichermedium 122 für eine Datenbank, eine Steuereinrichtung 124 und eine Kommunikationsschnittstelle 126 auf. Die Steuereinrichtung 124 ist mit der Erfassungseinrichtung 120, mit dem Speichermedium 122, mit der Kommunikationsschnittstelle 126, mit dem Steuerungselement 118 und mit dem Elektromotor 116 jeweils über eine Kommunikationsverbindung 128, 130, 132, 134, 136 verbunden. Die Kommunikationsschnittstelle 126 weist einen Bildschirm 138 und einen Multifunktionsknopf 140 auf und ist mit einem Smartphone 142 über eine drahtlose Kommunikationsverbindung 144 für einen Datenaustausch verbindbar.

Die Erfassungseinrichtung 120 ist am Grundgerät 104 angeordnet und als RFID-Lesegerät ausgebildet. Somit ist die Erfassungseinrichtung 120 zum Erfassen von Identifikationsmerkmalen aus den Datenträgern 110, 112 der Zubehörteile 106, 108 eingerichtet. Daneben ist das Speichermedium 122 für eine Datenbank im Grundgerät 104 integriert. Die Datenbank umfasst eine Mehrheit von Identifikationsmerkmalen und hierzu verknüpfte Arbeitsmodi. Jeder Arbeitsmodus umfasst mindestens eine Angabe über ein empfohlenes Zubehörteil, über voreingestellte Sollwerte für Betriebsparameter des Küchenmaschinesystems 102, über Zutatenarten und Ähnliches.

Das Küchenmaschinesystem 102, insbesondere die Steuereinrichtung 124 ist zum Ausführen des folgenden Verfahrens eingerichtet.

Sobald die Zubehörteile 106, 108 am Grundgerät 104 eingesetzt sind, befinden sich deren Datenträger 110, 112 im Erfassungsfeld der Erfassungseinrichtung 120. Die

Erfassungseinrichtung 120 erfasst dann die Identifikationsnummern der jeweiligen Zubehörteile 106, 108 und leitet diese an die Steuereinrichtung 124 weiter. Daraufhin vergleicht die Steuereinrichtung 124 die jeweiligen erfassten Identifikationsnummern mit den Identifikationsnummern, die in der Datenbank hinterlegt sind.

Hier ergibt der Vergleich jeweils eine Übereinstimmung. Dabei sind mit der Identifikationsnummer aus der Datenbank, die mit der für das erste Zubehörteil 106 erfassten Identifikationsnummer übereinstimmt, mehrere Arbeitsmodi verknüpft. Diese Arbeitsmodi entsprechen jeweils einem Zubereitungsvorgang, bei dem Zutaten gerührt, gekocht, erhitzt, geschnitten oder gegart werden. Für die Identifikationsnummer des zweiten Zubehörteils 108 ist nur ein Arbeitsmodus zutreffend, nämlich ein Arbeitsmodus entsprechend einer Lebensmittelzubereitung nach der "Sous-Vide" Art. Eine Prüfung durch die Steuereinrichtung 124 ergibt, dass einer der für die Identifikationsnummer des ersten Zubehörteils 106 zutreffenden Arbeitsmodi mit dem für die Identifikationsnummer des zweiten Zubehörteils 108 zutreffenden Arbeitsmodus übereinstimmt. So ist der Arbeitsmodus "Sous-Vide" sowohl für das erste Zubehörteil 106 als auch für das zweite Zubehörteil 108 zutreffend.

Die Steuereinrichtung 124 vergibt jedem der mit den übereinstimmenden Identifikationsnummern aus der Datenbank verknüpften Arbeitsmodi einen Prioritätsrang, wobei der Prioritätsrang des Arbeitsmodus "Sous-Vide" der Höchste ist. Weiterhin veranlasst die Steuereinrichtung 124 die Kommunikationsschnittstelle 126, die Arbeitsmodi in der Reihe nach den Prioritätsrängen anzuzeigen.

Dadurch, dass der Arbeitsmodus "Sous-Vide", also der für beide Zubehörteile 106, 108 zutreffende Arbeitsmodus, den höchsten Prioritätsrang hat, zeigt die Kommunikationsschnittstelle 126 diesen als Erster an. So ist dieser Arbeitsmodus leichter und schneller zugänglich als die weiteren Arbeitsmodi und somit auch als Schnellstartmodus zur Verfügung gestellt.

Das Anzeigen durch die Kommunikationsschnittstelle 126 erfolgt am Bildschirm 138 und parallel auch am Smartphone 142. Die Anzeige des als Schnellstartmodus zur Verfügung gestellten Arbeitsmodus auf dem Smartphone 142 umfasst eine erste Nutzeranfrage betreffend eine Bestätigung der Durchführung eines "Sous-Vide" Zubereitungsvorgangs und eine zweite Nutzeranfrage betreffend eine Dauer, für die ein Lebensmittel "Sous-Vide" behandelt werden soll. Das Smartphone 142 erfasst eine erste Nutzerantwort, die einer Bestätigung entspricht, und eine zweite Nutzerantwort, die einer Dauer von 2 Stunden entspricht. Das Smartphone 142 leitet beide Informationen über die Kommunikationsschnittstelle 126 an die Steuereinrichtung 124 weiter.

Daraufhin steuert die Steuereinrichtung 124 das Steuerungselement 118, den Elektromotor 116 und gegebenenfalls weitere relevante Bauteile des Küchenmaschinesystems 102 derart, dass ein Zubereitungsvorgang der Art "Sous-Vide" für eine Dauer von 2 Stunden bei einer im Schnellstartmodus "Sous-Vide" angegebenen Solltemperatur durchgeführt wird.

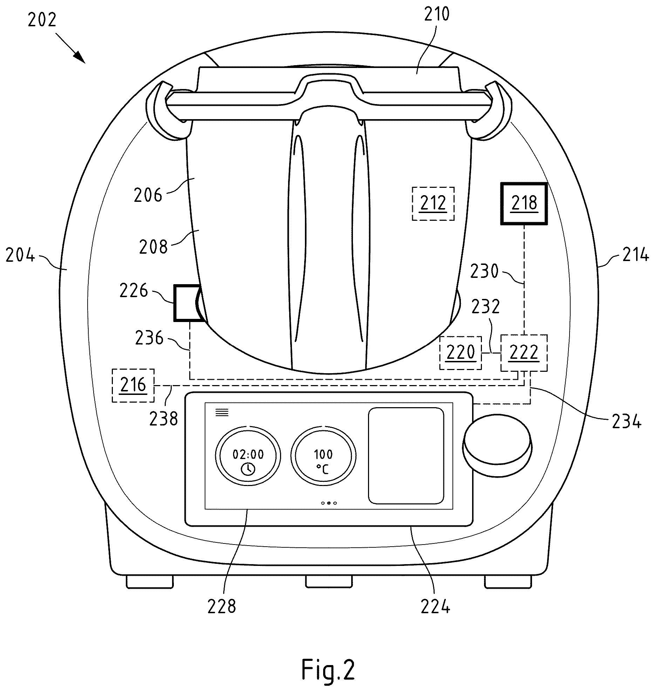

Fig. 2 zeigt ein weiteres Ausführungsbeispiel eines Küchenmaschinesystems 202 mit einem Grundgerät 204 und mit einem Zubehörteil 206.

Das Zubehörteil 206 ist ein für die Funktion "Wasserkochen" ausgebildetes Kochgefäß 208 mit einem Deckel 210 und weist einen Datenträger 212 in Form eines Barcodes entsprechend einer Seriennummer des Zubehörteils 206 auf.

Ähnlich wie bei der Fig. 1 weist das Grundgerät 204 ein Gehäuse 214, ein Steuerungselement 216 für ein Heizelement des Zubehörteils 206, eine Erfassungseinrichtung 218, ein Speichermedium 220 für eine Datenbank, eine Steuereinrichtung 222 und eine Kommunikationsschnittstelle 224 auf. Im Unterschied zum Ausführungsbeispiel aus der Fig. 1 ist die Erfassungseinrichtung 218 als optischer Leser zum Erfassen von maschinenlesbaren Informationen aus Barcodes ausgebildet. Weiterhin ist zusätzlich am Grundgerät 204 eine Positionserfassungseinrichtung 226 vorgesehen, die mit einem am Zubehörteil 206 angeordneten Element (nicht angezeigt) zusammenwirkt, um ein Einsetzen oder Entfernen des Zubehörteils 206 am Grundgerät 204 zu erfassen. Die Kommunikationsschnittstelle 224 ist ein berührungsempfindlicher Bildschirm 228.

Die Steuereinrichtung 222 ist mit der Erfassungseinrichtung 218, mit dem Speichermedium 220, mit der Kommunikationsschnittstelle 224, mit der Positionserfassungseinrichtung 226 und mit dem Steuerungselement 216 jeweils über eine bidirektionale Kommunikationsverbindung 230, 232, 234, 236, 238 verbunden.

Das Küchenmaschinesystem 202, insbesondere die Steuereinrichtung 222 ist zum Ausführen des folgenden Verfahrens eingerichtet.

Die Positionserfassungseinrichtung 226 erfasst ein Einsetzen eines Zubehörteils 206 und gibt ein entsprechendes Signal an die Steuereinrichtung 222 aus. Nach Auswerten dieses Signals und entsprechendem Erkennen des Einsetzens veranlasst die Steuereinrichtung 222 die Erfassungseinrichtung 218, einen Erfassungsvorgang zur Identifizierung des eingesetzten Zubehörteils 206 durchzuführen. Hierbei erfasst die Erfassungseinrichtung 218 die Seriennummer aus dem Datenträger 212 des Zubehörteils 206 und leitet eine entsprechende Information an die Steuereinrichtung 222 weiter.

Durch Vergleich der erfassten Seriennummer mit Seriennummer, die in der Datenbank hinterlegt sind, identifiziert die Steuereinrichtung 222 das eingesetzte Zubehörteil 206 als ein Kochgefäß 208, das für die Funktion "Wasserkochen" geeignet ist. Außerdem ist in der Datenbank ein Arbeitsmodus "Wasserkochen" mit der Seriennummer des Zubehörteils 206 verknüpft. Aufgrund des Erkennens eines Einsetzens dieses Zubehörteils 206 stellt die Steuereinrichtung 222 die im Arbeitsmodus noch nicht festgelegte Solltemperatur für das Steuerungselement 216 des Küchenmaschinesystems 202 auf 100 °C ein.

Anschließend befiehlt die Steuereinrichtung 222 der Kommunikationsschnittstelle 224, den so geänderten Arbeitsmodus einzeln anzuzeigen. Der Arbeitsmodus "Wasserkochen" wird durch die vorgenommene, automatische Einstellung der Solltemperatur und der Einzelanzeige als Schnellstartmodus zur Verfügung gestellt. Gleichzeitig mit dem Befehl an die Kommunikationsschnittstelle 224 steuert die Steuereinrichtung 222 das Steuerungselement 216 derart, dass ein Zubereitungsvorgang mit einer Solltemperatur von 100 °C gestartet wird.

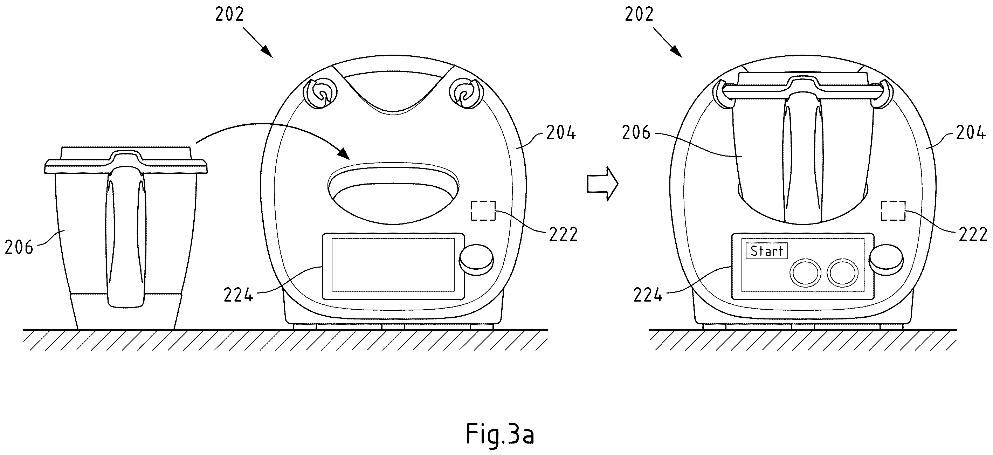

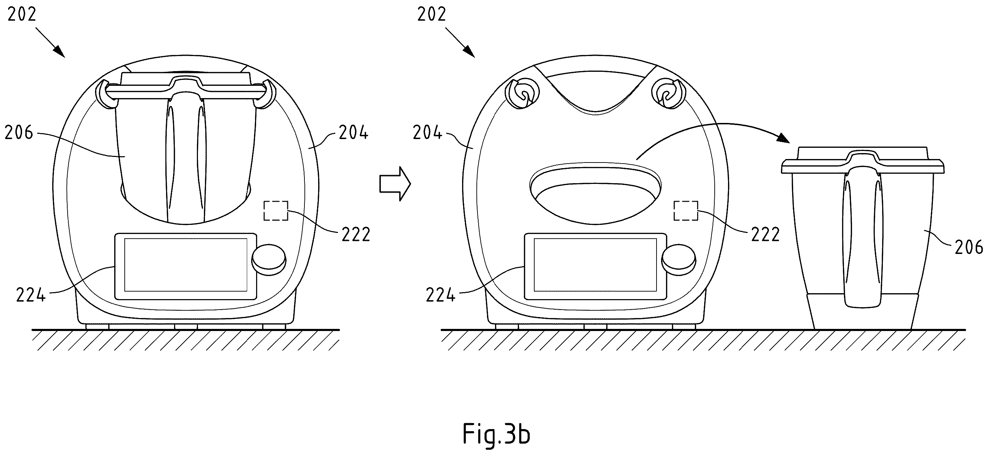

Fig. 3a und 3b zeigen ein weiteres Ausführungsbeispiel eines Küchenmaschinesystems 202, das ähnlich wie beim Ausführungsbeispiel aus der Fig. 2 ausgebildet ist. So werden für die Erläuterung der Fig. 3a und 3b dieselben Bezugszeichen verwendet wie in der Fig. 2.

Im linken Teil der Fig. 3a ist das Zubehörteil 206 vom Grundgerät 204 entfernt und die Kommunikationsschnittstelle 224 befindet sich in einem Ruhezustand und zeigt kein Bild an. Im rechten Teil der Fig. 3a wurde das Zubehörteil 206 am Grundgerät 204 eingesetzt. Die Steuereinrichtung 222 hat das Einsetzen erkannt und das Zubehörteil 206 identifiziert. Dementsprechend hat die Steuereinrichtung 222 die Kommunikationsschnittstelle 224 aktiviert und dahingehend gesteuert, dass diese beim Aktivwerden den Schnellstartmodus "Wasserkochen" anzeigt.

Die Fig. 3b zeigt den Fall, bei dem ein Schnellstartmodus bereits zur Verfügung gestellt ist und das Zubehörteil 206 vom Grundgerät 204 entfernt wird. So ist im linken Teil der Fig. 3b das Zubehörteil 206 am Grundgerät 204 eingesetzt und die Kommunikationsschnittstelle 224 zeigt den Schnellstartmodus "Wasserkochen" an. Nach Entfernen des Zubehörteils 206 befindet sich das Küchenmaschinesystem 202 in einem Zustand entsprechend des rechten Teils der Fig. 3b: zur Folge des Erkennens des Entfernens hat die Steuereinrichtung 222 die Durchführung eines Zubereitungsvorgangs "Wasserkochen" eingestellt und die Kommunikationsschnittstelle 224 in einen Ruhemodus umgestellt.

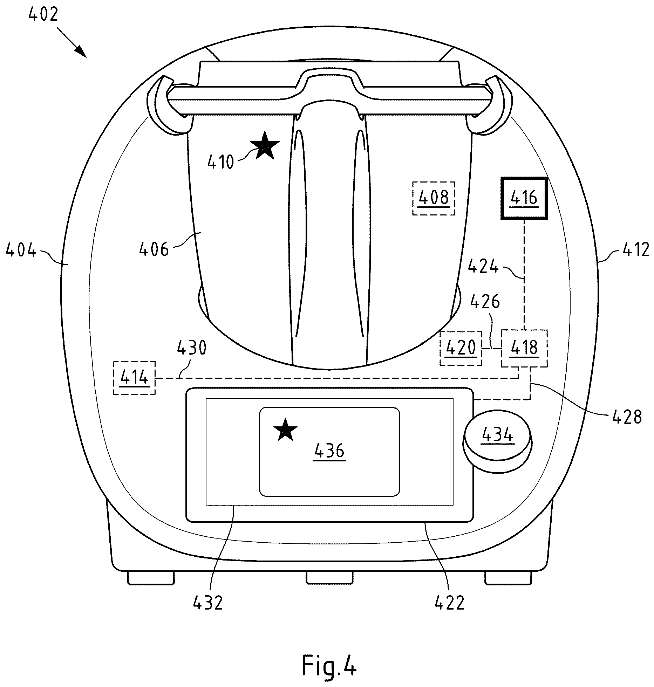

Fig. 4 zeigt ein weiteres Ausführungsbeispiel eines Küchenmaschinesystems 402 mit einem Grundgerät 404 und mit einem Zubehörteil 406.

Das Zubehörteil 406 ist als Kochgefäß ausgebildet, das für eine große Vielfalt von Zubereitungsvorgängen einsetzbar ist. Das Zubehörteil 406 weist einen Datenträger 408 mit einem als maschinenlesbare Information gespeicherten Identifikationsmerkmal auf, das hier eine einmalig und nur für dieses spezifische Zubehörteil 406 vergebene Identifikationsnummer ist. Das Zubehörteil 406 weist weiterhin ein sichtbares alleinstellendes Merkmal 410 zur Vereinfachung der Erkennung durch den Nutzer auf, hier als Stern dargestellt.

Das Grundgerät 404 weist ein Gehäuse 412, einen Elektromotor 414, eine Erfassungseinrichtung 416, eine Steuereinrichtung 418, ein Speichermedium 420 für eine Datenbank und eine Kommunikationsschnittstelle 422 auf. Die Steuereinrichtung 418 ist mit der Erfassungseinrichtung 416, mit dem Speichermedium 420, mit der Kommunikationsschnittstelle 422 und mit dem Elektromotor 414 jeweils über eine Kommunikationsverbindung 424, 426, 428, 430 verbunden. Die Kommunikationsschnittstelle 422 ist als Bildschirm 432 und als Multifunktionsknopf 434 ausgebildet.

Das Küchenmaschinesystem 402 ist zum Ausführen des folgenden Verfahrens eingerichtet.

Beim ersten Verwenden dieses Zubehörteils 406 in Zusammenhang mit dem Grundgerät 404 hat die Steuereinrichtung 418 entsprechend einer Nutzereingabe einen bestimmten Arbeitsmodus als Schnellstartmodus in der Datenbank mit dem spezifischen Identifikationsmerkmal dieses bestimmten Zubehörteils 406 verknüpft und diesen Schnellstartmodus zusätzlich als Favorit hinterlegt.

In dem hier dargestellten Fall ist das Zubehörteil 406 ein weiteres Mal am Grundgerät 404 eingesetzt. Die Steuereinrichtung 418 vergleicht automatisch die durch die Erfassungseinrichtung 416 erfasste, einmalige Identifikationsnummer mit Identifikationsnummern aus der Datenbank. Aufgrund des früheren Hinterlegens des Schnellstartmodus als "Favorit" und der Verknüpfung mit der Identifikationsnummer des Zubehörteils 406 in der Datenbank stellt die Steuereinrichtung 418 diesen Schnellstartmodus 436 automatisch durch Anzeigen an der Kommunikationsschnittstelle 422 zur Verfügung. Dabei zeigt die Kommunikationsschnittstelle 422 eine Angabe an, dass es sich um einen als "Favorit" hinterlegten Schnellstartmodus 436 handelt.

Gleichzeitig veranlasst die Steuereinrichtung 418 den Start eines Zubereitungsvorgangs gemäß dem Schnellstartmodus durch entsprechendes Steuern der relevanten Funktionsteile des Küchenmaschinesystems 402.

## Patentansprüche

1. Küchenmaschinesystem (102, 202, 402)
- mit einem ein Gehäuse (114, 214, 412), eine Steuereinrichtung (124, 222, 418) und eine Kommunikationsschnittstelle (126, 224, 422) aufweisenden Grundgerät (104, 204, 404) und
- mit mindestens einem ein Identifikationsmerkmal aufweisenden Zubehörteil (106, 108, 206, 406),
**dadurch gekennzeichnet,**
- **dass** eine zum Erfassen eines Identifikationsmerkmals mindestens eines Zubehörteils (106, 108, 206, 406) eingerichtete Erfassungseinrichtung (120, 218, 416) vorgesehen ist, und
- **dass** die Steuereinrichtung (124, 222, 418) dazu eingerichtet ist,
- ein durch die Erfassungseinrichtung (120, 218, 416) erfasstes Identifikationsmerkmal mit mindestens einem Identifikationsmerkmal aus einer Datenbank (122, 220, 420) zu vergleichen, und
- mindestens einen Arbeitsmodus, der mit einem mit dem erfassten Identifikationsmerkmal übereinstimmenden Identifikationsmerkmal aus der Datenbank (122, 220, 420) verknüpft ist, über die Kommunikationsschnittstelle (126, 224, 422) als Schnellstartmodus zur Verfügung zu stellen.

2. Küchenmaschinesystem (102, 202, 402) nach Anspruch 1,
**dadurch gekennzeichnet,**
**dass** der Schnellstartmodus mindestens ein Element aus der Liste aufweist: eine an das Zubehörteil (106, 108, 206, 406) angepasste Voreinstellung, eine Zubereitungsanweisung entsprechend eines mit dem Zubehörteil (106, 108, 206, 406) durchführbaren Zubereitungsvorgangs, ein Sollwert für einen Zubereitungsparameter, eine Nutzeranfrage über eine Parametereinstellung, eine Nutzeranfrage über eine Bestätigung für den Start eines Zubereitungsvorgangs.

3. Küchenmaschinesystem (102, 202, 402) nach Anspruch 1 oder 2,
**dadurch gekennzeichnet,**
**dass** die Steuereinrichtung (124, 222, 418) dazu eingerichtet ist,
- zur Folge eines Erfassens eines Identifikationsmerkmals die Kommunikationsschnittstelle (126, 224, 422) von einem Ruhemodus in einen Aktivmodus umzustellen und
- bei der Umstellung in den Aktivmodus einen dem erfassten Identifikationsmerkmal entsprechenden Schnellstartmodus über die Kommunikationsschnittstelle (126, 224, 422) zur Verfügung zu stellen.

4. Küchenmaschinesystem (102, 202, 402) nach einem der Ansprüche 1 bis 3, **dadurch gekennzeichnet,**
- **dass** eine Positionserfassungseinrichtung (226) vorgesehen und dazu eingerichtet ist, ein Einsetzen oder Entfernen mindestens eines Zubehörteils (106, 108, 206, 406) in Bezug auf das Grundgerät (104, 204, 404) und / oder in Bezug auf ein weiteres Zubehörteil (106, 108, 206, 406) zu erfassen und an die Steuereinrichtung (124, 222, 418) weiterzuleiten, und
- **dass** die Steuereinrichtung (124, 222, 418) dazu eingerichtet ist,
- in Abhängigkeit von einem erfassten Identifikationsmerkmal und von einem erkannten Einsetzen eines Zubehörteils (106, 108, 206, 406) einen Schnellstartmodus zur Verfügung zu stellen,
und/ oder
- in Abhängigkeit von einem erfassten Identifikationsmerkmal und von einem erkannten Entfernen eines Zubehörteils (106, 108, 206, 406) die Zur-Verfügung-Stellung eines Schnellstartmodus zu beenden.

5. Küchenmaschinesystem (102, 202, 402) nach einem der Ansprüche 1 bis 4, **dadurch gekennzeichnet,**
- **dass** die Steuereinrichtung (124, 222, 418) dem Schnellstartmodus für die Zur-Verfügung-Stellung einen hohen Prioritätsrang, vorzugsweise den höchsten Prioritätsrang vergibt, und
- **dass** die Steuereinrichtung (124, 222, 418) Informationen über die Kommunikationsschnittstelle (126, 224, 422) nach einer priorisierten Anordnung, insbesondere in einer Reihenfolge nach absteigendem Prioritätsrang zur Verfügung stellt.

6. Küchenmaschinesystem (102, 202, 402) nach einem der Ansprüche 1 bis 5,
**dadurch gekennzeichnet,**
- **dass** der Schnellstartmodus mindestens eine Nutzeranfrage aufweist, und
- **dass** die Steuereinrichtung (124, 222, 418) dazu eingerichtet ist, Funktionsteile des Küchenmaschinesystems (102, 202, 402) gemäß Angaben aus dem Schnellstartmodus in Abhängigkeit von einer erfassten Nutzerantwort auf die Nutzeranfrage zu steuern.

7. Küchenmaschinesystem (102, 202, 402) nach einem der Ansprüche 1 bis 5,
**dadurch gekennzeichnet,**
- **dass** der Schnellstartmodus mindestens eine Angabe über einen Zubereitungsvorgang aufweist, und
- **dass** die Steuereinrichtung (124, 222, 418) dazu eingerichtet ist, gleichzeitig mit der Zur-Verfügung-Stellung des Schnellstartmodus mit der Durchführung des Zubereitungsvorgangs zu starten und Funktionsteile des Küchenmaschinesystems (102, 202, 402) in Abhängigkeit von den Angaben zu steuern.

8. Küchenmaschinesystem (102, 202, 402) nach einem der Ansprüche 1 bis 7,
**dadurch gekennzeichnet,**
**dass** die Steuereinrichtung (124, 222, 418) dazu eingerichtet ist,
- mehrere erfasste Identifikationsmerkmale mit Identifikationsmerkmalen aus einer Datenbank (122, 220, 420) zu vergleichen, und
- als Schnellstartmodi Arbeitsmodi zur Verfügung zu stellen, die jeweils mit allen mit einem erfassten Identifikationsmerkmal übereinstimmenden Identifikationsmerkmalen aus der Datenbank (122, 220, 420) verknüpft sind.

9. Küchenmaschinesystem (102, 202, 402) nach einem der Ansprüche 1 bis 8,
**dadurch gekennzeichnet,**
**dass** die Steuereinrichtung (124, 222, 418) dazu eingerichtet ist,
- einen bereits in der Vergangenheit zur Verfügung gestellten Schnellstartmodus als Favorit zu speichern, und
- bei erneutem Erfassen desselben Identifikationsmerkmals den als Favorit gespeicherte Schnellstartmodus gesondert zur Verfügung zu stellen.

10. Verfahren zum Betreiben eines Küchenmaschinesystems (102, 202, 402), insbesondere eines Küchenmaschinesystems (102, 202, 402) nach einem der Ansprüche 1 bis 9,
- bei dem mindestens ein Identifikationsmerkmal eines Zubehörteils (106, 108, 206, 406) erfasst wird,
- bei dem das mindestens eine erfasste Identifikationsmerkmal mit mindestens einem Identifikationsmerkmal aus einer Datenbank (122, 220, 420) verglichen wird, und
- bei dem mindestens ein mit einem mit dem erfassten Identifikationsmerkmal übereinstimmenden Identifikationsmerkmal verknüpfter Arbeitsmodus als Schnellstartmodus zur Verfügung gestellt wird.

11. Verfahren nach Anspruch 10,
- bei dem zur Folge eines Erfassens eines Identifikationsmerkmals eine Kommunikationsschnittstelle (126, 224, 422) von einem Ruhemodus in einen Aktivmodus umgestellt wird und
- bei dem bei der Umstellung in den Aktivmodus ein dem erfassten Identifikationsmerkmal entsprechender Schnellstartmodus über die Kommunikationsschnittstelle (126, 224, 422) zur Verfügung gestellt wird.

12. Verfahren nach Anspruch 10 oder 11,
- bei dem ein Einsetzen oder Entfernen mindestens eines Zubehörteils (106, 108, 206, 406) in Bezug auf das Grundgerät (104, 204, 404) und / oder in Bezug auf ein weiteres Zubehörteil (106, 108, 206, 406) erfasst wird,
- bei dem ein Schnellstartmodus in Abhängigkeit von einem erfassten Identifikationsmerkmal und von einem erkannten Einsetzen eines Zubehörteils (106, 108, 206, 406) zur Verfügung gestellt wird,
und / oder
- bei dem die Zur-Verfügung-Stellung eines Schnellstartmodus in Abhängigkeit von einem erfassten Identifikationsmerkmal und von einem erkannten Entfernen eines Zubehörteils (106, 108, 206, 406) beendet wird.

13. Verfahren nach einem der Ansprüche 10 bis 12,
- bei dem für die Zur-Verfügung-Stellung ein hoher Prioritätsrang, vorzugsweise der höchste Prioritätsrang dem Schnellstartmodus zugeordnet wird, und
- bei dem Schnellstartmodi und / oder sonstige Arbeitsmodi in einer Reihenfolge nach absteigendem Prioritätsrang zur Verfügung gestellt werden.

14. Verfahren nach einem der Ansprüche 10 bis 13,
- bei dem eine Nutzerantwort auf eine Nutzeranfrage aus einem Schnellstartmodus erfasst wird und Funktionsteile des Küchenmaschinesystems (102, 202, 402) gemäß Angaben aus dem Schnellstartmodus in Abhängigkeit von der erfassten Nutzerantwort gesteuert werden,
oder
- bei dem gleichzeitig mit der Zur-Verfügung-Stellung des Schnellstartmodus mit der Durchführung eines Zubereitungsvorgangs entsprechend des Schnellstartmodus automatisch gestartet wird und Funktionsteile des Küchenmaschinesystems (102, 202, 402) in Abhängigkeit von Angaben aus dem Schnellstartmodus gesteuert werden.

15. Verfahren nach Anspruch 11 oder 12,
- bei dem der zur Verfügung gestellte Schnellstartmodus als Favorit gespeichert wird, und
- bei dem bei einem späteren, erneuten Erfassen desselben Identifikationsmerkmals der als Favorit gespeicherte Schnellstartmodus gesondert zur Verfügung gestellt wird.

16. Computerprogramm mit Befehlen, deren Ausführung auf mindestens einem Prozessor einer Steuereinrichtung eines Küchenmaschinesystems nach einem der Ansprüche 1 bis 9 die Durchführung eines Verfahrens nach einem der Ansprüche 10 bis 15 bewirkt.
